# EUROPEAN PATENT APPLICATION

(11) **EP 1 975 781 A1**
(43) Date of publication of application: **01.10.2008**
(21) Application number: 06728855.5
(22) Date of filing: 09.03.2006
(51) Int. Cl.: G06F 9/44, G06F 9/54

(54) **INFORMATION PROCESSING TERMINAL AND PROGRAM**

(30) Priority: 17.01.2006 JP 2006008924
(71) Applicant: Matsushita Electric Industrial Co., Ltd., Kadoma-shi Osaka 571-8501 (JP)
(72) Inventor: KAWAI, Yuuji c/o Matsushita Electric Co.Ltd., 2-1-61, Shiromi, Chuo-ku, Osaka 540 6207 (JP)
(74) Representative: Grünecker, Kinkeldey, Stockmair & Schwanhäusser Anwaltssozietät
(86) International application number: PCT/JP2006/304638
(87) International publication number: WO 2007/083399

(57) **Abstract**

An information processing terminal capable of specifying function information of a Jar file not to read the function information from a Jad file in which the function information of the Jar file are described, and a program used to specify the function information of the Jar file are provided.

An intermediate code analyzing portion 3 searches a text corresponding to a class name from a description of at least one intermediate code, or more constituting the Jar file, and specifies function information corresponding to the class name by looking up list information saved in a discrimination information saving portion 4. A menu displaying portion 5 causes a display 10 to display the function information specified by the intermediate code analyzing portion 3, together with a name of a Java program (or a mark, an icon, or the like representing the Java program).

## Description

### <Technical Field>

The present invention relates to an information processing terminal for executing an application program described in Java (registered trademark) language and, more particularly, an information processing terminal for specifying functional contents performed by executing the application program.

### <Background Art>

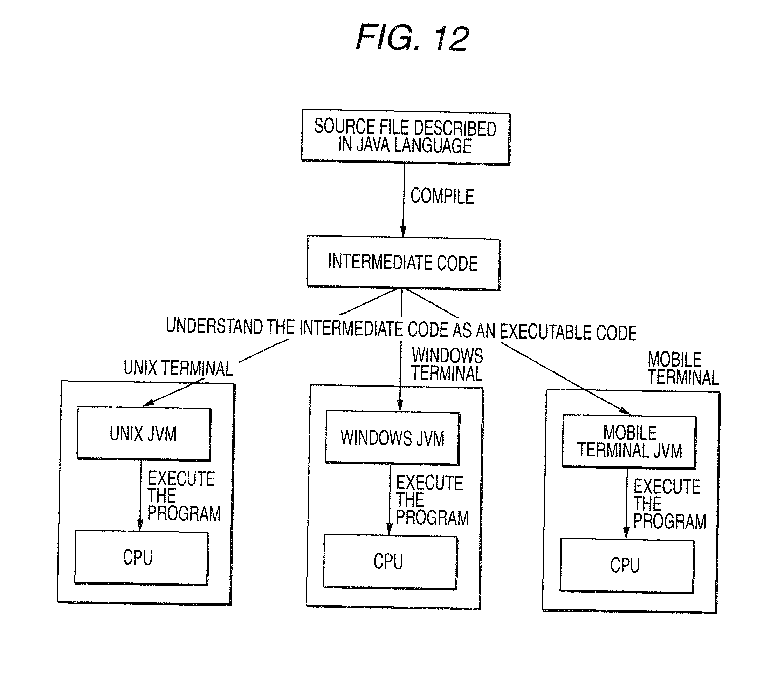

Java was born as the application runtime environment to overcome differences in the interfaces, and is now utilized in an application developing or running environment in various fields from a large-scale system to a cellular phone. A flow of processes required until the Java program running machine interprets and executes the source file described in Java language will be explained briefly with reference to a conceptual view in FIG.12 until the Java program is executed.

Java is the compiler-type computer language, and the Java compiler complies the source file (the format the description in which the human being can understand) described in the Java language. This Java compiler does not directly translate the source file into the executable file that the CPU can understand, but the Java compiler deletes grammatical errors from the source file and then translates once the source file into the intermediate code that is processed to make the machine easy to understand the source file (The intermediate code is not the executable file that the CPU can understand, but is called the "intermediate code" because such code is closer to the executable file rather than the source file. In some cases a data structure containing such intermediate code is called the "class file".). However, since the CPU cannot understand the description of the intermediate code, the system of "Java virtual machine (JVM)" is employed in Java as the mechanism that can interpret the intermediate code and cause the CPU to execute the intermediate code. This Java virtual machine signifies the program that understands and executes the intermediate code that the Java compiler generates as if as the executable file. As a result, if the Java virtual machine is prepared every type of CPU or OS, the program can be executed by using the same intermediate code even in various interfaces (That is, if one source file is formed, a plurality of Java program running machines each having the different interface can execute the intermediate code that is translated from this source file respectively).

Also, in the specification disclosed in Non-Patent Literature 1, the mobile terminal device into which Java is installed stores the Java application execution file (referred to as a "Jar (Java archive) file" hereinafter) and the Java application administration file (referred to as a "Jad (Java application descriptor) file" hereinafter) therein. Such Jar file is constructed by at least one intermediate code or more per one Java application program. Such Jad file describes Jar file function information, e.g., information of functions that are performed by the mobile terminal device when each intermediate code is executed, data capacity of each intermediate code or Jar file, URL as the download destination of the Java application program, version information of each intermediate code, and the like.

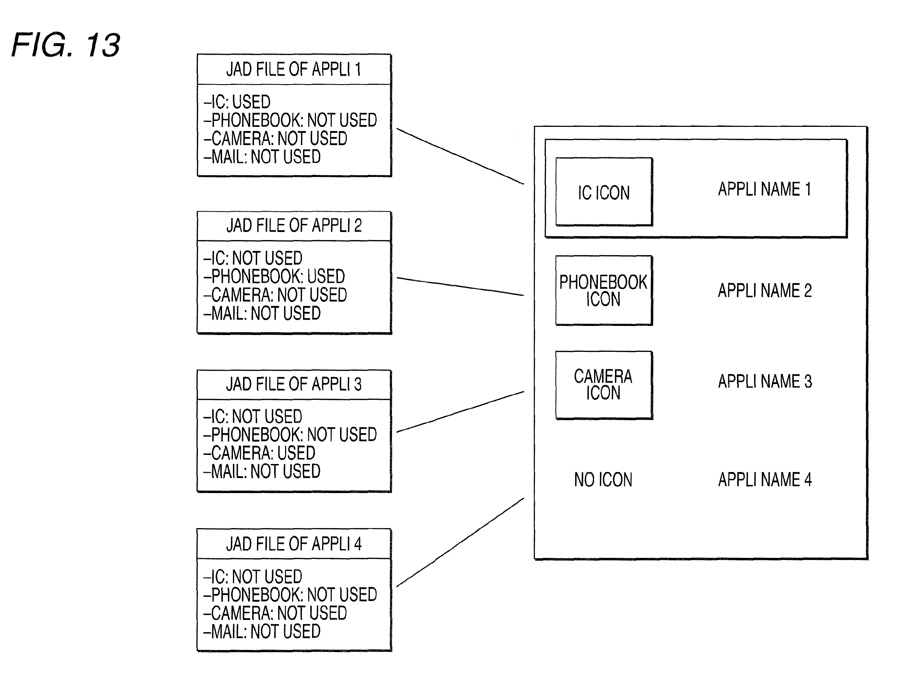

The mobile terminal device reads the data described in the Jad file when it refers to the information about the Java application program. A particular example where the information described in the Jad file is displayed by the display built in the mobile terminal device will be explained hereunder. An example of function information about the function utilized in the process when the Jar file is executed, and a display example of the function information provided by the mobile terminal device are shown in FIG.13. In the Jad file corresponding to Java application program 1, the function information indicating that, when the Java application program 1 is executed, the function of the mobile terminal device utilized by that process is an IC card is described by the wording of "IC: used". Also, in Java application programs 2, 3, like the Java application program 1, the function information indicating that, when the Java application programs 2, 3 are executed, respective functions of the mobile terminal device utilized by those processes are a phonebook and a camera are described by the wordings of "Phonebook: used" and "Camera: used". The mobile terminal device reads the function information from the Jad file every Java application program, and displays an icon corresponding to the function information. Since the function information is displayed in this manner, the user of the mobile terminal device can confirm the function of the mobile terminal device utilized by that process at a glance when her or she executes the Java application program.

Non-Patent Literature 1: NTT DoCoMo "Let's form i-mode contents" "i-appli technical material downloading" "i-appli contents developing guide for Doja-4.x i-appli options i-appli extended version" "http://www.nttdocomo.co.jp/p_s/imode/ make/java/index.html"

### <Disclosure of the Invention>

### <Problems that the Invention is to Solve>

However, in order to read the function information from the Jad file, the function information of the Jar file must be described previously in the Jad file. Because this process is made mainly by the programmer of the Java application program, such process imposes a burden on the programmer of the Java application program. Also, because the function information that is not utilized by that process even when the Jar file is executed is described by mistake in the Jad file as the function information of the Jar file, the function information of the Jar file are not always exactly described in the Jad file. In addition, because some programmers of the Java application program describe in detail the function information of the Jar file in the Jad file and the others describe only the major function information out of the function information of the Jar file in the Jad file, the function information that fulfill user's need of the mobile terminal device are not always described in the Jad file.

The present invention has been made in view of the above circumstances, and it is an object of the present invention to provide an information processing terminal capable of specifying function information of a Jar file without reading of the function information from a Jad file in which the function information of the Jar file are described, and a program used to specify the function information of the Jar file.

### <Means for Solving the Problems>

An information processing terminal of the present invention for causing a CPU to execute processes in compliance with an intermediate code that is translated from an object- oriented program, includes a discrimination information saving portion for storing a correspondence between a text and function information about a function that the information processing terminal performs when the CPU is caused to execute the process in accordance with at least one of a class and a method containing the text as an identifier in the intermediate code; and an intermediate code analyzing portion for specifying the text representing at least one or both identifiers of the class and the method from a description of the intermediate code, and specifying the function information corresponding to the specified text by referring to the correspondence stored in the discrimination information saving portion.

According to the mobile terminal device according to the first embodiment of the present invention, the function that the mobile terminal device performs in executing the object- oriented program can be specified from the description of the intermediate code translated from the object-oriented program not to read the function information from the object-oriented program. Therefore, because unlike the prior art there is no necessity for the programmer of the Java application program to describe the function information of the object-oriented program previously in the object-oriented program, a burden imposed on the programmer of the Java application program can be lessened. Also, because the mobile terminal device specifies the function to be performed in compliance with the description of the intermediate code, the wrong function that does not coincide with the description of the intermediate code is never specified and thus the proper function can be specified exactly.

Also, the information processing terminal of the present invention further includes a displaying portion for displaying various information; wherein the displaying portion displays the function information specified by the intermediate code analyzing portion to correlate with information representing the intermediate code.

According to this configuration, the specified function information is displayed to correlate with the information representing the intermediate code. Therefore, the user can understand the intermediate codes and the functions corresponding to the intermediate codes at a glance.

In addition, a program of the present invention of causing a CPU to execute processes in compliance with an intermediate code that is translated from an object-oriented program, the program causing the CPU to execute
a procedure of specifying a text representing an identifier of at least one or both of a class and a method, and a procedure of specifying the function information corresponding to the specified text, by looking up a correspondence between a text and function information about a function that the information processing terminal performs when the CPU is caused to execute the process in accordance with at least one of a class and a method containing the text as an identifier in the intermediate code.

### <Advantage of the Invention>

The present invention can provide the information processing terminal possesses such an advantage that the function information of the Jar file can be specified even though the function information are not read from the Jad file in which the function information of the Jar file are described, and the program used to specify the function information of the Jar file.

### <Brief Description of the Drawings>

FIG.1 is a conceptual view of classes and methods in Java language.
FIG.2 is a view showing a configuration of a mobile terminal device according to a first embodiment of the present invention.
FIG.3 is a view showing list information of a class name and a function that the mobile terminal device performs when the class is executed.
FIG.4 is a view showing a display example of function information provided by the mobile terminal device according to the first embodiment of the present invention.
FIG.5 is a flowchart showing an operation of the mobile terminal device according to the first embodiment of the present invention.
FIG.6 is a view showing list information of a method name and a function that the mobile terminal device performs when the method is executed.
FIG.7 is a view showing a display example of function information provided by a mobile terminal device according to a second embodiment of the present invention.
FIG.8 is a flowchart showing an operation of the mobile terminal device according to the second embodiment of the present invention.
FIG.9 is a view showing an example of the method.
FIG.10 is a view showing a configuration of a mobile terminal device according to a third embodiment of the present invention.
FIG.11 is a flowchart showing an operation of the mobile terminal device according to the third embodiment of the present invention.
FIG.12 is a conceptual view until the Java program is executed.
FIG. 13 is a view showing an example of function information of functions that are described in a Jad file and utilized in the process when a Jar file is executed, and a display example of function information provided by the mobile terminal device.

### <Description of Reference Numerals and Signs>

1, 100 mobile terminal device
2 Java appli downloading portion
3 intermediate code analyzing portion
4 discrimination information saving portion
5 menu displaying portion
6 Java appli saving portion
7 mobile terminal JVM
8 CPU
9 driving portion
10 display
1001 function list information saving portion
1002 function deciding portion
1003 warning display controlling portion

### <Best Mode for Carrying Out the Invention>

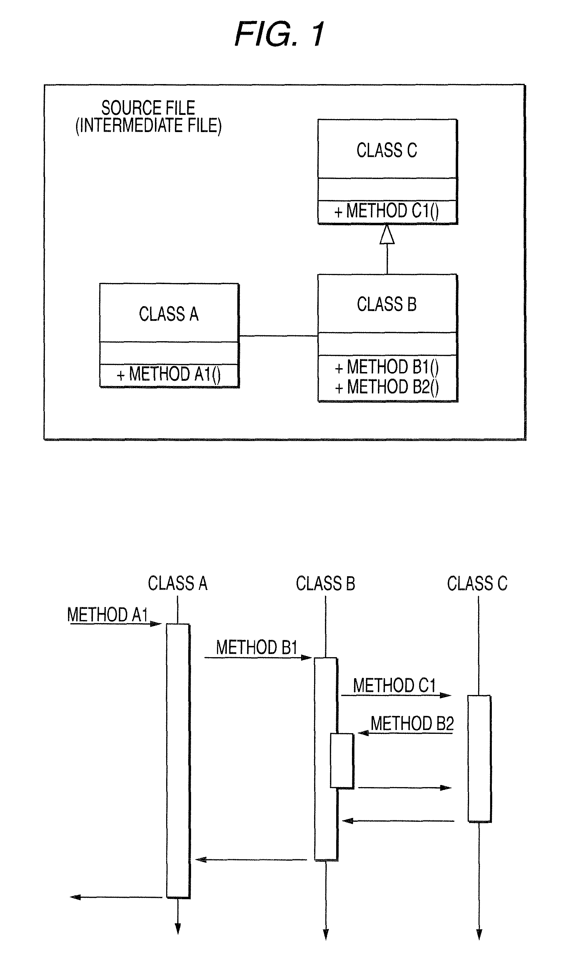

Prior to explanation of information processing terminals according to embodiments of the present invention, first a conception of a class and a conception of a method in Java language will be explained hereinafter. The class consists of a variable (field variable) and a method as a unit of the basic function (behavior) of the Java program, and is a unit of one assembly constituting the Java program. The Java program is composed of a plurality of classes. A conceptual view of classes and methods in the Java language is shown in FIG.1. In a conceptual view of the Java program shown in FIG.1, the execution of the program is started from Method A1 in Class A, and then the process is advanced to Classes B, C to execute the programs described in Method B1, Method B2 of Class B and Method C1 of Class C, so that the program is executed while calling mutually the methods of respective classes between a plurality of classes. Here, Classes A, B, C and Methods A1, B1, B2, C1 represent the class name and the method name (identifier) to identify the class and the method respectively.

An example of Classes A, B, C and Methods A1, B1, B2, C1 given when the Java program is the program used to control the function utilizing a noncontact IC card that is installed into the recent mobile terminal device will be explained hereunder. Such a situation may be considered that Class A is an assembly of the program to input/output a control signal that allows or inhibits the noncontact IC card to hold a radio communication with an IC card reader/writer, Class B is an assembly of the program to execute data processing, e.g., read, write, delete, and the like the data stored in the noncontact IC card, and Class C is an assembly of the program to execute the processing based on various data. Concrete processing contents of Classes A, B, C are stipulated by Methods A1, B1, B2, C1. When the control signal is output by executing Method A1, which is used to output the control signal that allows the noncontact IC card to hold the radio communication to the noncontact IC card, out of the programs described in Class A, the data are read from the noncontact IC card or the data are written into the noncontact IC card by executing Method B1, which is used to read the data stored in the noncontact IC card, or Method B2, which is used to write the data into the noncontact IC card, out of the programs described in Class B, and then a sum of money is calculated based on the data that are read or written by the processes in Methods B1, B2 by executing Method C1, which is used to calculate the sum of money available for a service using the noncontact IC card and store the sum of money in the noncontact IC card, out of the programs described in Class C. Thus, the sum of money is stored in the noncontact IC card. In this manner, the process contents of the Java program are roughly classified by the class, and details of each processing contents are specified by the method.

Here, structures of the class files generated from the source file described in the Java language are stipulated by the Java language specification, and the class names and the method names described in the source file are contained as the texts as they are. The Java program running machine can also specify the class names and the method names in the intermediate code by searching these texts.

The information processing terminal according to embodiments of the present invention detects the class name or the method name in the intermediate code, and then specifies the function that is executed by the information processing terminal when the CPU is caused to execute the process of the Java program, from the detectd class name or method name. A concrete method of specifying the function that is to be executed by the information processing terminal from the class name or the method name will be explained in detail in following embodiments.

### (First Embodiment)

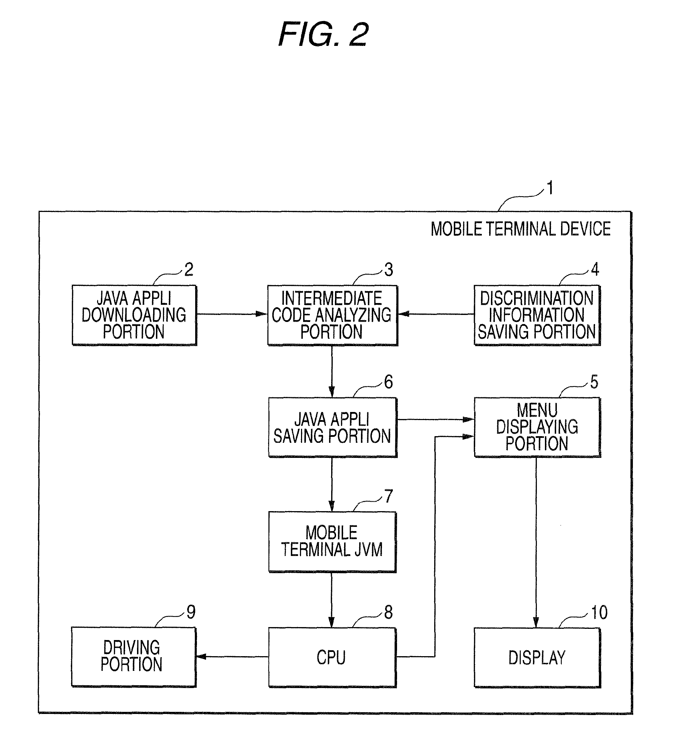

While taking a mobile terminal device as an example of the information processing terminal of the present invention, a mobile terminal device according to a first embodiment of the present invention will be explained in detail hereunder. A configurative view of a mobile terminal device according to a first embodiment of the present invention is shown in FIG.2.

In a mobile terminal device 1 of the first embodiment of the present invention, such a configuration is employed that a Java appli downloading portion 2 acquires the Java program (which is composed of the Jar file consisting of at least one intermediate code or more, and the Jad file having the function information of the Jar file) from an external server. In this case, the present invention is not restricted to the configuration that acquires the Java program from the external server, and any configuration may be employed if the Java program may be saved in the Java appli saving portion.

An intermediate code analyzing portion 3 searches the text corresponding to the class name from the description of at least one intermediate code or more constituting the Jar file. A concrete searching approach executed by the intermediate code analyzing portion 3 acquires the text representing the sequential class name from a class storing area.

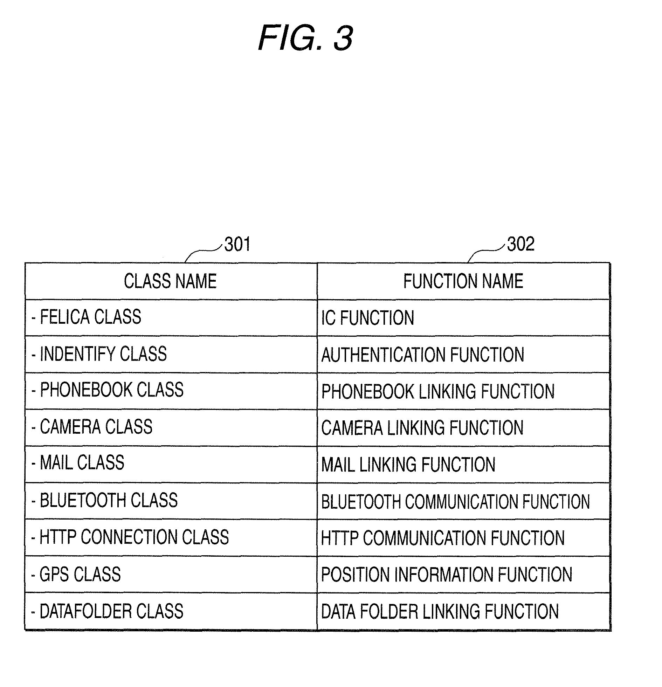

A discrimination information saving portion 4 saves the class names and the function information about the function that the mobile terminal device 1 performs in executing the program described in that class, while correlating them with each other. List information of a class name 301 and a function name 302 that the mobile terminal device 1 performs when the class is executed is shown in FIG.3. The class specified by the class name in the list information in FIG.3 is capsulated, and the class name is given solely in the Java language. Therefore, the class name of the capsulated class corresponds to the function that the mobile terminal device performs in executing the program described in that class on a one-to-one basis. While taking the names of Classes A, B, C as the programs that are used to control the function utilizing the noncontact IC card, which are cited as examples in the explanation in FIG.1, and their function information as examples, concrete correspondences between the class name and the function information will be explained hereunder.

The name of Class A is represented by "Identify Class", and causes the mobile terminal device 1 to execute the function (function information: authentication function) of outputting/inputting the control signal that allows or inhibits the noncontact IC card to hold a radio communication with the IC card reader/writer. Also, the name of Class B corresponds to "Felica (registered trademark) Class" given in FIG.3, and causes the mobile terminal device 1 to execute the function (function information: IC function) of executing the data processing, e.g., read, write, delete, etc. the data stored in the noncontact IC card. Also, the name of Class C corresponds to "DataFolder Class" given in FIG.3, and causes the mobile terminal device 1 to execute the function (function information: data folder linking function) of executing the processing based on various data.

The intermediate code analyzing portion 3, when detectd the class name represented by the above text, specifies the function information corresponding to this class name by looking up the list information saved in the discrimination information saving portion 4.

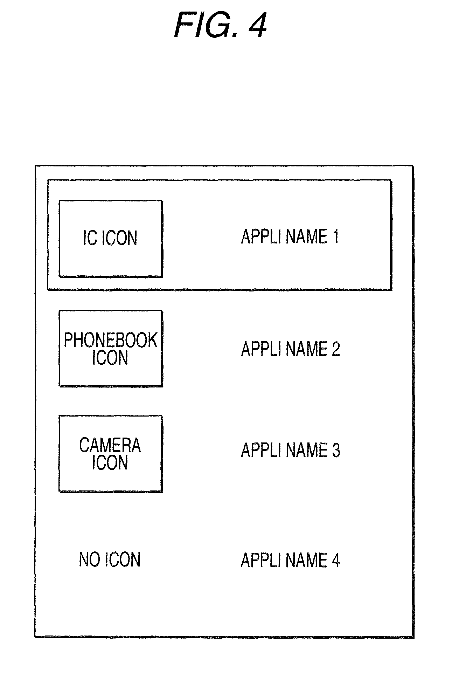

A menu displaying portion 5 displays the function information specified by the intermediate code analyzing portion 3 (the authentication function, the IC function, and the data folder linking function in the case of the program that is used to control the function utilizing the above contact IC card) together with the name of the Java program (or a mark, an icon, or the like representing the Java program) on a display 10 built in the mobile terminal device 1 of the present invention. A display example of function information provided by the mobile terminal device 1 according to the first embodiment of the present invention is shown in FIG.4. In the display example in FIG.4, icons (an IC icon, a phonebook icon, a camera icon) representing the functions that the mobile terminal device 1 utilizes in executing the Java application program are displayed adjacent to the names of the Java application programs (Appli names 1, 2, 3, 4). For example, an icon indicating the IC function that the mobile terminal device 1 utilizes in executing the Java application program entitled by Appli name 1 is displayed next to Appli name 1 as the name of the Java application program.

A Java appli saving portion 6 saves a main body of the Java application program that the Java appli downloading portion 2 downloads from the external server, the class name specified by the intermediate code analyzing portion 3, the function information corresponding to the class name, and the like.

A mobile terminal JVM 7 is a program that is used to understand the intermediate code for the mobile terminal as if as the executable file and execute the intermediate code.

A CPU 8 executes various processes and controls in the mobile terminal device 1.

A driving portion 9 drives a noncontact IC function, a camera function, a GPS function, and the like.

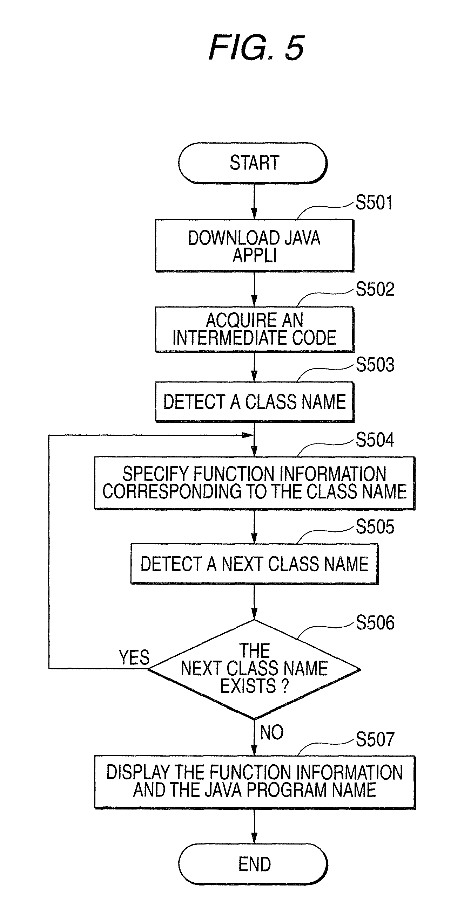

An operation of the mobile terminal device 1 according to the first embodiment of the present invention constructed as above will be explained with reference to a flowchart shown in FIG.5 hereunder. Here, an example where the function corresponding to "Felica Class" is specified and displayed will be explained.

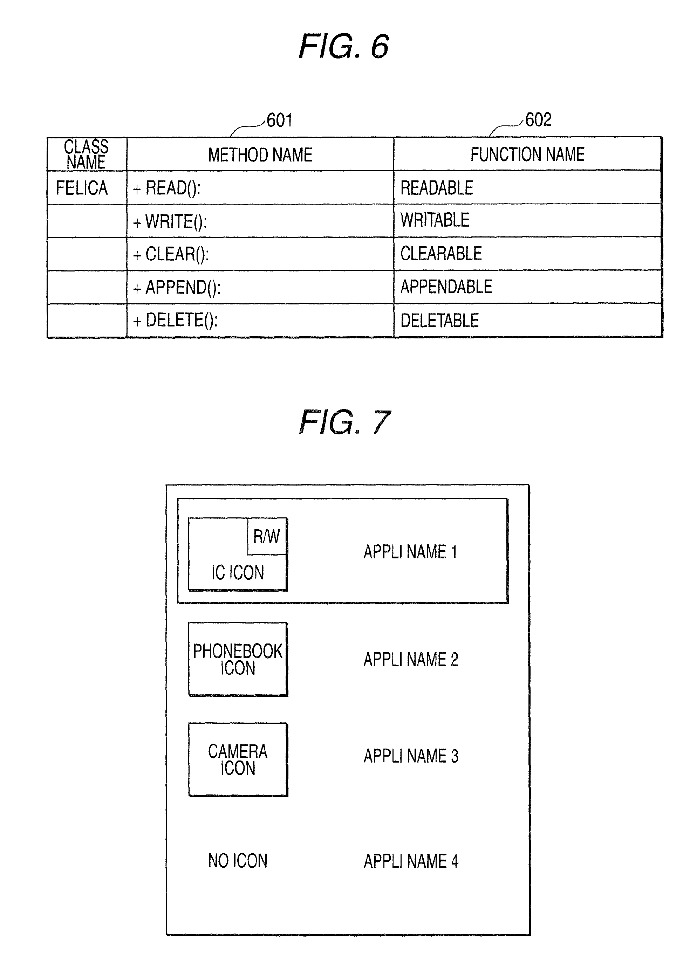

First, the Java application downloading portion 2 acquires the Java program that consists of the Jar file formed of at least one intermediate code, or more and the Jad file having the function information of the Jar file (step S501). For example, the class shown in FIG.6 is contained in the Java program downloaded here.

The intermediate code analyzing portion 3 acquires at least one intermediate code, or more constituting the Jar file (step S502), and searches the text corresponding to the class name from the description of the acquired intermediate code (step S503). Here, in the Java program shown in FIG.6, since the text representing "Felica Class" is contained in the intermediate code, the intermediate code analyzing portion 3 detects the text "Felica" as the class name.

The intermediate code analyzing portion 3 specifies the function information corresponding to this class name by looking up the list information saved in the discrimination information saving portion 4 from the class names obtained by the search in step S503 (step S504). Here, the intermediate code analyzing portion 3 specifies that the function corresponding to the detectd "Felica" is the IC function, by referring to the list information saved in the discrimination information saving portion 4 shown in FIG.3.

The intermediate code analyzing portion 3 searches the next class name (step S505), and decides whether or not the next class name is present (step S506). If the next class name is present, the process goes back to step S504 wherein the intermediate code analyzing portion 3 specifies the function information corresponding to the next class name.

In contrast, in step S506, if the next class name is not present, the menu displaying portion 5 causes the display 10 built in the mobile terminal device 1 of the present invention to display the function information specified by the intermediate code analyzing portion 3 (the authentication function, the IC function, and the data folder linking function in the case of the program that is used to control the function utilizing the above noncontact IC card), together with the name of the Java program (or the mark, the icon, or the like representing the Java program) (step S507). Then, the process is ended.

According to the mobile terminal device according to the first embodiment of the present invention, the function that the mobile terminal device performs in executing the Jar file can be specified from the description of the intermediate code constituting the Jar file, without the reading of the function information from the Jad file in which the function information of the Jar file are described. Therefore, because unlike the prior art there is no necessity for the programmer of the Java application program to describe previously the function information of the Jar file in the Jad file, a burden imposed on the programmer of the Java application program can be lessened. Also, because the function that the mobile terminal device performs is specified in compliance with the description of the intermediate code, the wrong function that does not coincide with the description of the intermediate code is never specified and thus the proper function can be specified exactly.

### (Second Embodiment)

A mobile terminal device according to a second embodiment of the present invention will be explained in detail hereunder, while taking the mobile terminal device as an example of the information processing terminal of the present invention.

In the first embodiment, such a configuration is employed that the function that the mobile terminal device performs in executing the class is specified by sensing the class name described in the intermediate code. In the second embodiment, such a configuration will be explained hereunder that the function that the mobile terminal device performs in executing the method is specified by sensing the name of method (method name) constituting the class Since the configuration of the mobile terminal device according to the second embodiment of the present invention is similar to that shown in FIG.2 and the process and the function of the portions except the intermediate code analyzing portion 3 and the discrimination information saving portion 4 are similar to those in the first embodiment, their explanation will be omitted herein.

The intermediate code analyzing portion 3 searches the text corresponding to the class name from the description of at least one intermediate code or more constituting the Jar file, and then searches the text corresponding to the method name constituting the class. A concrete searching approach executed by the intermediate code analyzing portion 3 acquires the text representing the sequential method name from the method storing area.

The discrimination information saving portion 4 saves the method name and the function information about the function that the mobile terminal device performs in executing the program described in the method while correlating them with each other. List information of a method name 601 and a function 602 that the mobile terminal device 1 performs in executing the method is shown in FIG.6. The method specified by the method name in the list information in FIG.6 is also capsulated, and the method name is given solely in the Java language. Therefore, the method name of the capsulated method and the function that the mobile terminal device performs in executing the program described in that method correspond to each other on a one-to-one basis. While taking the names of Methods B1, B2 constituting Class B as the programs that are used to control the function utilizing the noncontact IC card, which are cited as examples in the explanation in FIG.1, and their function information as examples, concrete correspondences between the method name and the function information will be explained hereunder.

The name of Method B1 corresponds to "read" given in FIG.6, and causes the mobile terminal device to execute the function (function information: readable) of reading the data stored in the noncontact IC card. The name of Method B2 corresponds to "write" given in FIG.6, and causes the mobile terminal device to execute the function (function information: writable) of writing the data into the noncontact IC card.

The intermediate code analyzing portion 3, when detectd the method name represented by the above text, specifies the function information corresponding to this method name by looking up the list information saved in the discrimination information saving portion 4.

The menu displaying portion 5 causes the display 10 built in the mobile terminal device 1 of the present invention to display the function information specified by the intermediate code analyzing portion 3 (the authentication function, the IC function, and the data folder linking function, especially "readable" and "writable" in the IC function, in the case of the program that is used to control the function utilizing the above noncontact IC card), together with the name of the Java program (or the mark, the icon, or the like representing the Java program). A display example of the function information provided by the mobile terminal device 1 according to the second embodiment of the present invention is shown in FIG.7. In the display example in FIG.7, the icons (the IC icon, the phonebook icon, the camera icon) representing the functions that the mobile terminal device 1 utilizes in executing the Java application program are displayed adjacent to the names of the Java application programs (Appli names 1, 2, 3, 4). Also, a "R/W" mark indicating that the IC function executes the reading and writing process is displayed on the upper right portion of the IC icon.

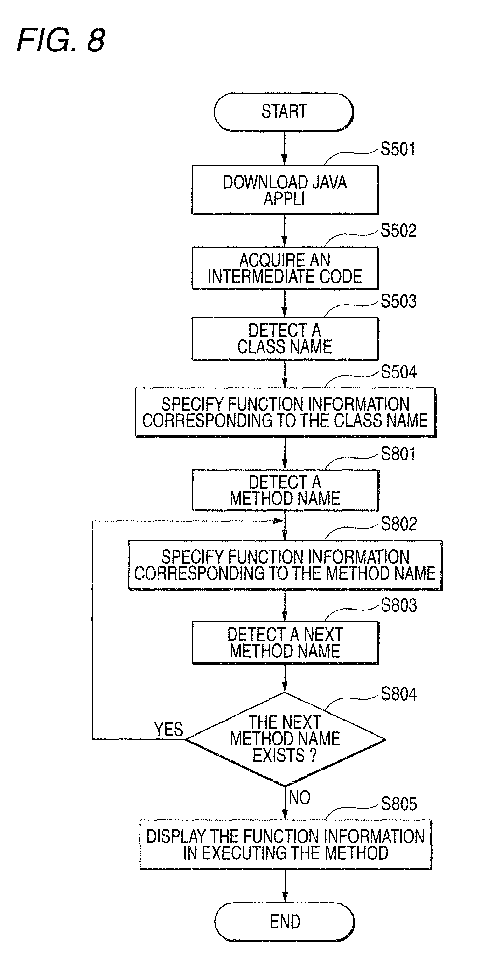

An operation of the mobile terminal device 1 according to the second embodiment of the present invention constructed as above will be explained with reference to a flowchart shown in FIG.8 hereunder.

Since the operations carried out until the information of the function corresponding to the class name is specified, i.e., procedures in steps S501 to S504 are similar to those in the first embodiment shown in FIG.5, their explanation will be omitted herein.

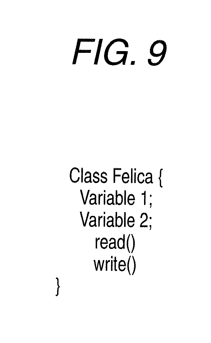

The intermediate code analyzing portion 3, after specifies the information of the function corresponding to the class name, searches the text corresponding to the method name constituting the detectd class and then detects the method name (step S801). FIG.9 shows the method contained in the class. In FIG.9, the intermediate code analyzing portion 3 searches a "read" method from the method storing area and acquires it.

Subsequently, the intermediate code analyzing portion 3 specifies the function information corresponding to the detectd method name by referring to the list information saved in the discrimination information saving portion 4 (step S802). Here, the intermediate code analyzing portion 3 decides that the function corresponding to the detectd "read" is the IC readable function, by looking up the list information saved in the discrimination information saving portion 4 shown in FIG.6.

The intermediate code analyzing portion 3 searches the next method name (step S803), and decides whether or not the next method name exists (step S804). If the next method name exists, the process goes back to step S802 wherein the function information corresponding to the next method name is specified. For example, in FIG.9, "write" is detectd as the next method name, and the writable function corresponding to the "write" is specified.

In contrast, in step S804, if the next method name does not exist, for example, if it is decided by the third search that the next method name does not exist because only two method names are provided, the menu displaying portion 5 causes the display 10 built in the mobile terminal device 1 of the present invention to display the function information specified by the intermediate code analyzing portion 3 (the authentication function, the IC function, and the data folder linking function, especially "readable" and "writable" in the IC function, in the case of the program that is used to control the function utilizing the above noncontact IC card), together with the name of the Java program (or the mark, the icon, or the like representing the Java program) (step S805). Then, the process is ended.

According to the mobile terminal device according to the first embodiment of the present invention, the function that the mobile terminal device performs in executing the Jar file can be specified from the description of the intermediate code constituting the Jar file not to read the function information from the Jad file in which the function information of the Jar file are described. Therefore, because unlike the prior art there is no necessity for the programmer of the Java application program to describe the function information of the Jar file previously in the Jad file, a burden imposed on the programmer of the Java application program can be lessened. Also, because the function that the mobile terminal device performs is specified in compliance with the description of the intermediate code, the wrong function that does not coincide with the description of the intermediate code is never specified and thus the proper function can be specified exactly. In addition, because the function that the mobile terminal device performs in executing the Jar file can be restricted stepwise and specified such that the function information based on the class name is specified and then the function information based on the method name is specified, the function information can be specified in response to a detailed level of the function information that the user of the mobile terminal device demands.

### (Third Embodiment)

A mobile terminal device according to a third embodiment of the present invention will be explained in detail hereunder, while taking the mobile terminal device as an example of the information processing terminal of the present invention.

In the first and second embodiments, such a configuration is given that the function that the function the mobile terminal device performs in executing the class and the method is specified by sensing the class name and the method name constituting the class described in the intermediate code. In the third embodiment, such a configuration will be explained hereunder that the class name described in the intermediate code is detected, then the class name is compared with the list information of the functions held by own mobile terminal device, and then a warning to the effect that there is a danger that the user cannot utilize the function is issued if the specified function information is not found in the list information, or the user is warned of the disadvantage that may be caused by the function before the user utilizes the function if the specified function information is predetermined function information.

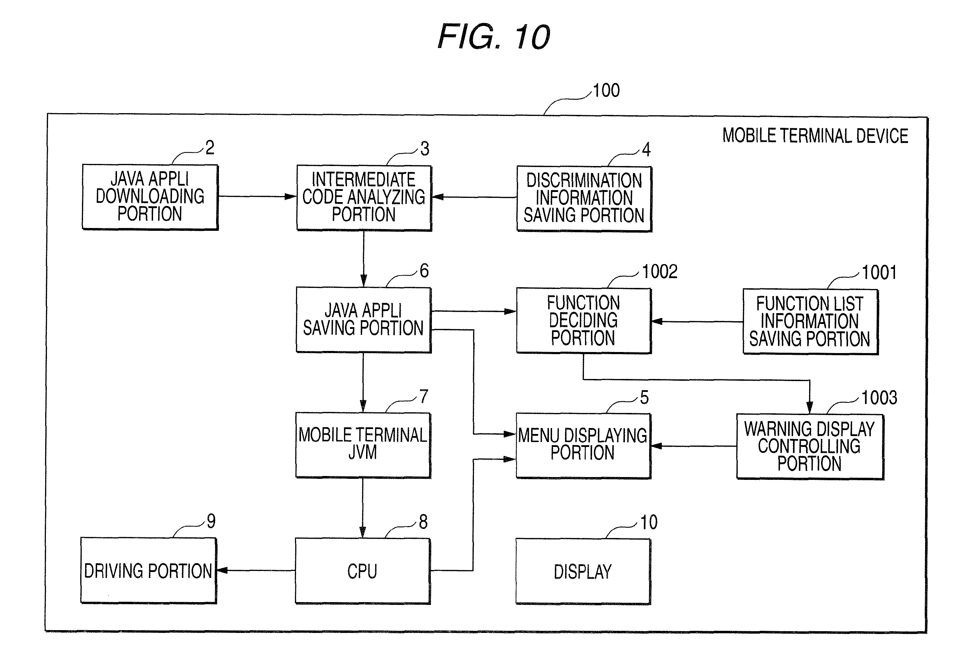

FIG.10 shows a configuration of a mobile terminal device according to a third embodiment of the present invention. In the configuration in the first embodiment shown in FIG.2, a function list information saving portion 1001, a function deciding portion 1002, and a warning display controlling portion 1003 are provided to a mobile terminal device 100 shown in FIG.10. Here, the same reference symbols are affixed to the same constituent elements as those of the mobile terminal device 1 shown in FIG.2 and their explanation will be omitted herein.

The function list information saving portion 1001 saves the list information of the functions held by own mobile terminal device 100.

The function deciding portion 1002 decide whether or not the specified function is the function that own mobile terminal device 100 possesses, by comparing the function information specified by the intermediate code analyzing portion 3 with the functions of own mobile terminal device 100 held in the function list information saving portion 1001, and sends out an informing signal to the warning display controlling portion 1003 when it is decided that the specified function is not the function that own mobile terminal device 100 possesses. Also, the function deciding portion 1002 decides whether or not the specified function is the predetermined function information, and sends out an informing signal to the warning display controlling portion 1003 when it is decided that the specified function is the predetermined function information.

The warning display controlling portion 1003, when received the informing signal from the function deciding portion 1002, instructs the menu displaying portion 5 to display a warning.

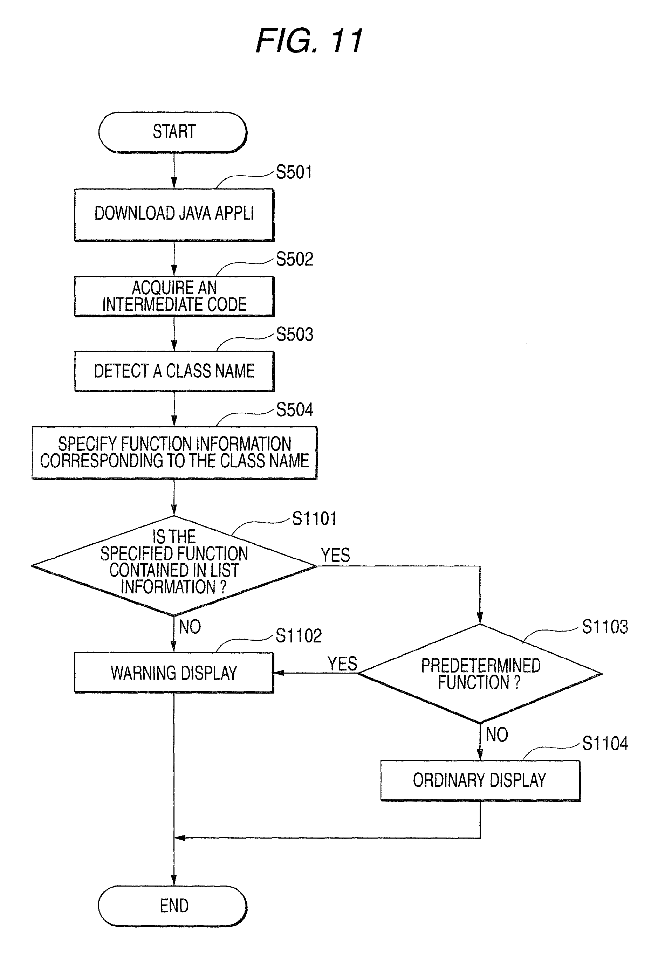

An operation of the mobile terminal device 100 according to the third embodiment of the present invention constructed as above will be explained with reference to a flowchart shown in FIG.11 hereunder.

Since operations until information of the function corresponding to the class name is specified, i.e., procedures in steps S501 to S504 are similar to those in the first embodiment shown in FIG.5, their explanation will be omitted herein.

After the information of the function corresponding to the class name is specified, the function deciding portion 1002 decides whether or not the specified function information is contained in the list information that own mobile terminal device possesses, by looking up the list information of functions of own device held by the function list information saving portion 1001 (step S1101).

In step S1101, if it is decided that the specified function information is not contained in the list information of functions of own device, the function deciding portion 1002 sends out an informing signal to the warning display controlling portion 1003. The warning display controlling portion 1003 causes the display 10 to display a warning to the effect that that there is a danger that the user cannot utilize the function (step S1102). For example, when the application using the camera function is executed in the model equipped with no camera, the warning display controlling portion 1003 issues a warning to the effect that there is a danger that the user cannot utilize the function in this mobile terminal device because this application uses the camera function.

In contrast, in step S1101, if it is decided that the specified function information is contained in the list information of functions of own device, the function deciding portion 1002 decides further whether or not the specified information is the predetermined function information (step S1103). In the application that uses both the communication function and PIM, there is a possibility that private information flows out. For example, as the predetermined function decided here, it is decided whether or not the mobile terminal device is using the communication function.

In step S1103, if it is decided that the specified information is the predetermined function information, the function deciding portion 1002 sends out an informing signal to the warning display controlling portion 1003. Then, the warning display controlling portion 1003 receives the informing signal, and goes to step S1102. Then, the warning display controlling portion 1003 causes the display 10 to display a warning to the effect that the disadvantage is generated by utilizing the function.

In contrast, if it is decided that the specified information is not the predetermined function information, the warning display controlling portion 1003 causes the display 10 to display not the warning but the ordinary display as explained in step S504 (step S1104). Then, the process is ended.

According to the mobile terminal device according to the first embodiment of the present invention, the function that the mobile terminal device performs in executing the Jar file can be specified from the description of the intermediate code constituting the Jar file, without the reading of the function information from the Jad file in which the function information of the Jar file are described. Therefore, because unlike the prior art there is no necessity for the programmer of the Java application program to describe the function information of the Jar file previously in the Jad file, a burden imposed on the programmer of the Java application program can be lessened. Also, because the function that the mobile terminal device performs is specified in compliance with the description of the intermediate code, the wrong function that does not coincide with the description of the intermediate code is never specified and thus the proper function can be specified exactly. In addition, because the function information based on the class name is specified and in turn the warning to the effect that that there is a danger that the user cannot utilize the function when the specified information is not the function contained in the list information of functions that own mobile terminal device holds, the user's attention is called to the fact. Further, because the disadvantage that will be generated by utilizing the function is warned when the specified information is the predetermined information, a security performance can be improved by noticing such a possibility that the private information flows out, or the like when the predetermined information is utilized.

In the above explanation, the mobile terminal device is used as an example of the information processing terminal. The above explanation is similarly true of other computers, and the like.

The present invention is explained in detail with reference to particular embodiments. But it is obvious for those skilled in the art that various variations and modifications can be applied without departing from a spirit and a scope of the present invention.

This application is based upon Japanese Patent Application (Patent Application No.2006-008924) filed on January 17, 2006; the contents of which are incorporated herein by reference.

### <Industrial Applicability>

As described above, the information processing terminal according to the present invention possesses such an advantage that the function information of the Jar file can be specified even though the function information are not read from the Jad file in which the function information of the Jar file are described, and is useful to the information processing terminal capable of specifying the function contents, which are performed by executing the application program, from the intermediate code that is obtained by converting the source file described in the Java language, or the like.

## Claims

1. An information processing terminal for causing a CPU to execute processes in compliance with an intermediate code that is translated from an object-oriented program, comprising:
a discrimination information saving portion for storing a correspondence between a text and function information about a function that the information processing terminal performs when the CPU is caused to execute the process in accordance with at least one of a class and a method containing the text as an identifier in the intermediate code; and
an intermediate code analyzing portion for specifying the text representing at least one or both identifiers of the class and the method from a description of the intermediate code, and specifying the function information corresponding to the specified text by referring to the correspondence stored in the discrimination information saving portion.

2. An information processing terminal according to claim 1, further comprising:
a displaying portion for displaying various information;
wherein the displaying portion displays the function information specified by the intermediate code analyzing portion to correlate with information representing the intermediate code.

3. A program of causing a CPU to execute processes in compliance with an intermediate code that is translated from an object-oriented program, the program causing the CPU to execute
a procedure of specifying a text representing an identifier of at least one or both of a class and a method, and
a procedure of specifying the function information corresponding to the specified text, by looking up a correspondence between a text and function information about a function that the information processing terminal performs when the CPU is caused to execute the process in accordance with at least one of a class and a method containing the text as an identifier in the intermediate code.
